# EUROPÄISCHE PATENTANMELDUNG

(11) **EP 1 526 387 A1**
(43) Veröffentlichungstag der Anmeldung: **27.04.2005**
(21) Anmeldenummer: 04400055.2
(22) Anmeldetag: 22.10.2004
(51) Int. Cl.: G01S 11/12, G01C 3/22, G01S 3/786

(54) **Verfahren zum Messen von Abständen zwischen einem sich bewegenden Kraftfahrzeug und Objekten**

(30) Priorität: 24.10.2003 DE 10349823
(71) Anmelder: Valeo Schalter und Sensoren GmbH, 74319 Bietigheim-Bissingen (DE)
(72) Erfinder: Meyer, Thorsten, 74321 Bietigheim-Bissingen (DE)
(74) Vertreter: Bulling, Alexander, Dr.

(57) **Zusammenfassung**

Die Erfindung schlägt ein Verfahren zur Abstandsmessung vor durch Vergleich von aufgenommenen Videobildern eines Umfelds eines Fahrzeugs, wobei Bewegungsvektoren für viele Punkte im Bild ermittelt werden, aus denen dann mit Kenntnis der Fahrzeugbewegung der Abstand zwischen der Kamera und betrachteten Objekten an diesen Bildorten berechnet wird.

## Beschreibung

Die vorliegende Erfindung betrifft ein Verfahren zum Messen von Abständen zwischen einem sich bewegenden Kraftfahrzeug und Objekten, die sich gegebenenfalls ebenfalls bewegen, unter Zuhilfenahme einer standardmäßigen Videokamera.

Aus dem Stand der Technik sind mehrere Verfahren bekannt, welche den Abstand zwischen sich relativ zueinander bewegenden Objekten messen und insbesondere zur automatischen Steuerung von Fahrzeugen bzw. zur Unterstützung der Fahrzeuglenker herangezogen werden. Hierbei wird stets der Abstand des sich bewegenden Fahrzeugs von einem potentiellen Hindernis bestimmt.

Aus den Druckschriften DE 3302948 C2, DE 3445254 A1 und DE 3735062 A1 sind beispielsweise Einrichtungen zur Erfassung des Abstandes zu einem Ziel bekannt. Ein weiteres bekanntes Verfahren zur Abstandsbestimmung ist die sogenannte Parallaxenmessung mit Hilfe zweier Einzelkameras bzw. einer Stereo-Fernsehkamera. Dabei wird ein Punkt des Messobjekts gleichzeitig von den beiden Einzelkameras angepeilt und die Parallaxenwinkel zwischen einer Verbindungslinie zwischen den Kameras und einem Messpunkt bestimmt, sodass aus der bekannten Länge der Verbindungslinie und den gemessenen Parallaxenwinkeln die Entfernung auf einfache Weise bestimmt werden kann. Diese Messmethode zeigt in ihrer praktischen Anwendung jedoch mehrere Nachteile, insbesondere eine geringe Messgenauigkeit aufgrund der sich bei bewegenden Fahrzeugen variierenden zu messenden Abstände sowie eine zur Erzielung ausreichend präziser Messungen erforderliche umfangreiche Kalibrierung.

Darüber hinaus sind Verfahren zur Entfernungsmessung mit Lasern bekannt. Hierbei wirken sich jedoch die unterschiedlichen Rückstreu-Charakteristiken der verschiedenen Messobjekte dahingehend als nachteilig aus, dass die sehr hohe Dynamik schwer realisierbar ist. Reflektierende Oberflächen führen zu einer Streuung und zu Mehrfachreflexionen des Laserlichts, was Fehlmessungen nach sich zieht.

Aus der DE 4125688 C2 ist eine Abstandserfassungseinrichtung bekannt, welche mittels zweier beabstandeter Bildsensoren nach dem Triangulationsprinzip aus den relativen Abweichungen zwischen zwei Bildern des Messobjekts, die nacheinander aufgenommen werden, den Abstand errechnet. Die Relativverschiebungen werden erzielt, indem ein vorgegebenes Verschiebungsmuster auf die Bilder gelegt wird. Ein derartiges Verfahren zeichnet sich durch einen komplizierten Aufbau aus und benötigt darüber hinaus zwei voneinander getrennte optische Erfassungssysteme, so dass sich wiederum die Kalibrierung aufwändig gestaltet.

Aus der DE 4019214 sind ein Verfahren und eine Vorrichtung zur Abstandsmessung bekannt, die lediglich eine monokulare Fernsehkamera verwenden. Mit dieser wird eine Folge von Fernsehbildern von einem Messobjekt aufgenommen, wobei auf dem Messobjekt Referenzpunkte ausgewählt werden, deren Abstand voneinander konstant bleibt. Aus der Änderungsgeschwindigkeit des Bildabstandes in der Bildebene der Kamera und der Geschwindigkeitskomponente der Kamera selbst kann der Abstand zwischen dem Messobjekt und der Kamera errechnet werden.

Ausgehend davon ist es die Aufgabe der vorliegenden Erfindung, ein Verfahren bereitzustellen, welches die Vorteile eines Abstandserfassungssystems nutzt, ohne dabei mehrere Sensortypen zu benötigen, und welches derart weitergebildet ist, dass es eine einfache Kalibrierung gestattet und mit entsprechenden Hindernis-Warnsystemen auf einfache Art und Weise kombiniert werden kann.

Gelöst wird diese Aufgabe gemäß der Erfindung mit einem Verfahren zum Messen von Abständen zwischen einem Kraftfahrzeug und Objekten mit den Merkmalen des Anspruchs 1.

Das Verfahren umfasst die Schritte:
- Aufnahme von Bildern eines Umfelds eines Kraftfahrzeugs mit einer Videokamera;
- Erfassen von aktuellen Werten der Bewegung des Kraftfahrzeuges, wie beispielsweise Lenkwinkel und Geschwindigkeit;
- Ermitteln einer Bewegung der Videokamera relativ zu dem detektierten Umfeld aus den erfassten Werten der Bewegung des Kraftfahrzeugs jeweils in der Zeit zwischen der Aufnahme eines jeweils aktuellen Bildes und eines vorherigen Bildes;
- Vergleichen des jeweils aktuellen Bildes mit dem vorherigen Bild, wobei Referenzbildpunkte in dem aktuellen Bild, die realen Punkten auf einem Objekt im Umfeld entsprechen, festgelegt und korrespondierende Bildpunkte im vorherigen Bild bestimmt werden;
- Bestimmen jeweils einer Kurve für die Referenzbildpunkte im vorherigen Bild aus der ermittelten Bewegung der Videokamera;
- Berechnen, ob im vorherigen Bild die korrespondierenden Bildpunkte auf den entsprechenden Kurven liegen; und
- Berechnen der Abstände der realen Punkte von der Videokamera aus den Positionen auf den Kurven, wenn die korrespondierenden Bildpunkte auf den entsprechenden Kurven liegen.

Mit anderen Worten werden aus einer Video-Bildsequenz, die von einer am Fahrzeug angebrachten herkömmlichen Videokamera aufgenommen wird, mit Methoden der Videoanalyse Position und Abstand möglicher Hindernisse berechnet, wobei die Veränderungen zwischen aufeinanderfolgenden Videobildern analysiert und aus diesen unter Zuhilfenahme von Informationen über Geschwindigkeit und Lenkwinkel des Fahrzeugs die Position ermittelt wird.

In einer weiteren Ausführungsform des Verfahrens gemäß der Erfindung lässt sich demzufolge dann die Geschwindigkeit eines sich in dem Umfeld des Fahrzeugs bewegenden Objekts aus den sich verändernden Abständen berechnen, wenn die korrespondierenden Bildpunkte nicht auf den entsprechenden Kurven liegen.

In einer weiteren Ausführungsform lässt sich aus den dann ermittelten Abständen eine Datenstruktur des räumlichen Aufbaus des von der Videokamera kontinuierlich detektierten Umfelds ermitteln, und aus dieser Datenstruktur lassen sich Informationen über sich in dem Umfeld befindliche Objekte, wie beispielsweise Position, Größe, Geschwindigkeit, bestimmen, welche dann dem Fahrzeuglenker optisch und/oder akustisch angezeigt werden.

Gemäß der Erfindung können dann die so gewonnenen Informationen beispielsweise in einem System zur Einparkhilfe oder automatischen Bremsunterstützung verwendet werden. Denkbar ist auch ein Einsatz in automatischen Spurverfolgungseinrichtungen und in Systemen zur Warnung einer Gefahr von bevorstehenden Kollisionen.

Umgesetzt wird ein derartiges Verfahren mit den hinlänglich bekannten Sensoreinrichtungen für die Fahrzeuggeschwindigkeit und den Lenkwinkel und einer herkömmlichen Videokamera. Eine im Fahrzeug befindliche hinlänglich bekannte Prozessor- und Speichereinheit, die mit Einheiten für die Videoeingabe sowie für die Kommunikation mit den Sensoren versehen ist, führt unter Zuhilfenahme entsprechend vorgesehener Berechnungsalgorithmen die einzelnen Schritte des erfindungsgemäßen Verfahrens durch.

Die Videokamera wird in der Regel am Heck des Fahrzeugs angebracht, wobei sie leicht nach unten gerichtet ist. Dies ist insbesondere bei Systemen zur Einparkhilfe der Fall, da dort der Fahrzeuglenker den rückwärtigen Bereich schwer einsehen kann, während er im vor dem Fahrzeug liegenden Bereich selbst ausreichend Sicht hat. Selbstverständlich kann jedoch auch eine Videokamera in der Front des Fahrzeugs vorgesehen sein, wenn das erfindungsgemäße Verfahren Einsatz beispielsweise bei einer kontinuierlichen Abstandsmessung zu einem vorausfahrenden Fahrzeugs findet.

Die Kamera ist eine herkömmliche Videokamera und nimmt Videobilder mit einer festen Bildrate pro Sekunde auf. Die Bilder werden an die Prozessor- und Speichereinheit gesendet, welche das jeweils aktuellste und das vorhergehende Bild in digitaler Form abspeichert. Gleichzeitig empfängt die Prozessoreinheit entsprechende Daten über den Bewegungszustand des Fahrzeugs, wie beispielsweise den Lenkwinkel und die Geschwindigkeit des Fahrzeugs, von entsprechend an der Lenksäule oder an den Rädern vorgesehenen Sensoren.

### Das erfindungsgemäße Verfahren wird wie folgt durchgeführt:

Zwischen einem jeweils aktuellen Bild und einem diesem vorangehenden Bild werden Bewegungsvektoren ermittelt. Dazu wird in dem aktuellen Bild eine Vielzahl von Referenzbildpunkten festgelegt, die jeweils realen Punkten auf einem Objekt entsprechen, das sich im Umfeld des Fahrzeugs befindet und von der Kamera detektiert wird.

Die Auswahl der Referenzbildpunkte kann beispielsweise entweder nach einem festen Raster erfolgen, welches auf das Bild gelegt wird, oder es können gezielt einzelne Punkte herausgegriffen werden. Dabei handelt es sich um Punkte mit leicht wiedererkennbarer Umgebung, das heißt starkem lokalen Kontrast.

Anschließend werden zu jedem dieser Referenzbildpunkte mit den aus dem Stand der Technik an sich bekannten Verfahren des Blockvergleichs korrespondierende Punkte in dem dem aktuellen Bild vorausgehenden Bild gesucht und ermittelt. Der entsprechende korrespondierende Punkt befindet sich in der Nähe des Referenzbildpunktes und wird dadurch bestimmt, dass seine Umgebung der Umgebung des Referenzbildpunktes im aktuellen Bild möglichst ähnlich sieht. Als Maß für die Ähnlichkeit kann beispielsweise die Summe der absoluten Helligkeitsdifferenzen zwischen allen Bildpunktpaaren von zwei Bildblöcken herangezogen werden.

In einem folgenden Schritt des erfindungsgemäßen Verfahrens wird aus den Daten über den Lenkwinkel und gegebenenfalls der Geschwindigkeit des Kraftfahrzeugs die sich daraus ergebende translatorische und rotatorische Kamerabewegung relativ zu dem detektierten Umfeld berechnet, da diese mit dem Fahrzeug fest verbunden ist. Dieser Schritt erfolgt kontinuierlich jeweils für die Kamerabewegung zwischen der Aufnahme von zwei aufeinanderfolgenden Bildern.

Unter Annahme eines statischen Umfelds und aufgrund der Kenntnis der Geometrie der Optik der Videokamera kann nun basierend auf der vorher ermittelten Kamerabewegung für jeden Referenzbildpunkt eine Kurve in dem vorherigen Bild wie folgt ermittelt werden.

Im Einzelnen besteht der Bewegungsvektor zwischen einem Referenzpunkt und einem korrespondierenden Punkt, also die sichtbare Bewegung vom vorherigen Bild zu dem aktuellen Bild, bei einer zu Berechnungszwecken angenommenen statischen, von der Kamera detektierten Szene aus mehreren Komponenten. Diese bestimmen sich einerseits durch die Bewegung der Videokamera in Richtung ihrer optischen Achse und andererseits durch ihre Bewegung senkrecht zu dieser Achse sowie darüber hinaus durch die Rotation der Videokamera um die vertikale Achse. Diese Komponenten sind teils nur von der bekannten Position des Referenzpunktes und von der bekannten Kamerabewegung abhängig und ebenso teils auch von der Entfernung des von der Kamera betrachteten Objekts an dieser Stelle abhängig. Die Entfernung des betrachteten Objekts bildet den einzigen Parameter, dessen Variation zur Kurve mit den vorhergesagten Positionen des korrespondierenden Punktes führt, wobei die Position des korrespondierenden Punktes auf dieser Kurve nur vom Abstand des dann entsprechenden realen Punktes abhängt.

Unter Nutzung des vorhergehend erwähnten Zusammenhangs kann dann berechnet werden, ob der korrespondierende Bildpunkt auf der entsprechenden Kurve liegt. Ist dies der Fall, dann wird gemäß der Erfindung aus der Position auf der Kurve der Abstand des realen Punktes von der Kamera und damit von dem Fahrzeug berechnet.

Handelt es sich bei dem detektierten Objekt um ein stehendes Objekt, beispielsweise beim Einparken, lässt sich somit die Position kontinuierlich bestimmen. Handelt es sich bei dem detektierten Objekt um ein sich bewegendes Objekt, beispielsweise ein sich näherndes Fahrzeug, führt dies dazu, dass der korrespondierende Bildpunkt nicht auf der entsprechenden Kurve liegt. Aus dem Änderungsverhältnis lässt sich dann die Geschwindigkeit des sich bewegenden Objekts abschätzen, sodass sich das Verfahren zur fortlaufenden Abstandsmessung während des Fahrens eines Fahrzeugs eignet.

Als Ergebnis der Messungen und der nachfolgenden Berechnungen im Sinne einer vergleichenden Analyse benachbarter Referenzpunkte liegt in der Prozessor- und Speichereinheit eine Datenstruktur vor, die annähernd dem räumlichen Aufbau des von der Videokamera betrachteten Umfelds entspricht und die demzufolge Informationen über mögliche Hindernisse, deren Position, unter Umständen auch von deren Größe und Geschwindigkeit enthält. Diese Informationen können dann als Basis für eine optische oder akustische Darstellung dienen, die den Fahrzeuglenker beispielsweise beim Einparken unterstützen.

Das erfindungsgemäße Verfahren zeichnet sich dadurch aus, dass sich aktive Ultraschall- oder Radarsensoren einsparen lassen und dass die Winkelauflösung der ermittelten Objektpositionen beim erfindungsgemäßen Verfahren unter Zuhilfenahme einer herkömmlichen Videokamera deutlich besser ist als bei ultraschall- oder radarbasierten Systemen.

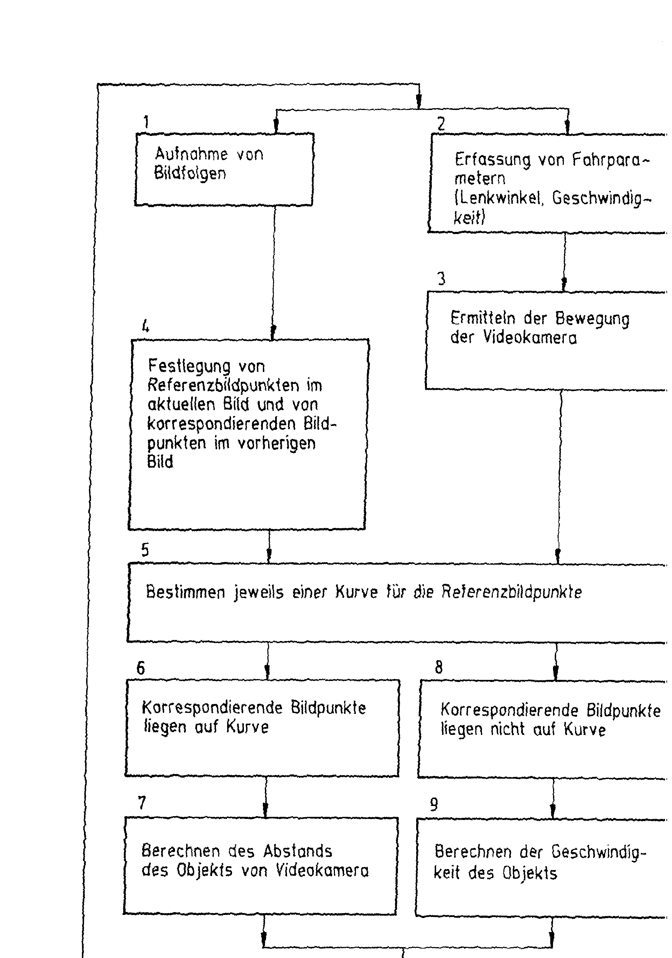

Die einzige Figur zeigt schematisch ein Blockdiagramm, welches den Ablauf des erfindungsgemäßem Verfahrens widerspiegelt.

In Schritt 1 wird von einer Videokamera kontinuierlich eine Bildfolge in einer konstanten Frequenz aufgenommen.

Gleichzeitig werden von im Fahrzeug befindlichen Sensoren den Fahrzustand wiedergebende Parameter, wie Lenkwinkel und Geschwindigkeit, erfasst (Schritt 2). Aus diesen FahrParametern wird die Bewegung der Videokamera in Schritt 3 ermittelt, wobei dies jeweils zwischen zwei aufeinanderfolgenden Bildaufnahmen erfolgt.

In Schritt 4 werden dann Referenzbildpunkte in dem aktuellen Bild und korrespondierende Bildpunkte in dem vorherigen Bild bestimmt.

Aus den in Schritt 3 und in Schritt 4 gewonnenen Daten und Beziehungen wird eine Kurve für jeden Referenzbildpunkt in dem vorherigen Bild ermittelt (Schritt 5).

Danach wird bestimmt, ob der korrespondierende Bildpunkt aus Schritt 4 auf der entsprechenden in Schritt 5 bestimmten Kurve liegt.

Ist dies der Fall (Schritt 6), lässt sich in Schritt 7 der Abstand eines realen Punktes, welcher die Position des Referenzbildpunktes in dem aktuellen Bild widerspiegelt, von der Videokamera aus den Positionen auf den Kurven berechnen.

Liegt der korrespondierende Bildpunkt nicht auf der Kurve (Schritt 8), lässt sich aus den sich verändernden Abstandswerten die Geschwindigkeit des detektierten Objekts bestimmen (9).

Der Prozess der Schritte 1 bis 9 wird kontinuierlich, sich wiederholend während des Einparkens oder Fahrens durchgeführt.

## Patentansprüche

1. Verfahren zum Messen von Abständen zwischen einem Kraftfahrzeug und Objekten, die sich im Umfeld des Kraftfahrzeugs befinden, aufweisend die Schritte:
- Aufnahme von Bildern eines Umfelds des Kraftfahrzeugs mit einer Videokamera;
- Erfassen von aktuellen Werten der Bewegung des Kraftfahrzeugs;
- Ermitteln einer Bewegung der Videokamera relativ zu dem detektierten Umfeld aus den erfassten Werten der Bewegung des Kraftfahrzeugs jeweils in der Zeit zwischen der Aufnahme eines jeweils aktuellen Bildes und eines vorherigen Bildes;
- Vergleichen des jeweils aktuellen Bildes mit dem vorherigen Bild, wobei Referenzbildpunkte in dem aktuellen Bild, die realen Punkten auf einem Objekt im Umfeld entsprechen, festgelegt und korrespondierende Bildpunkte im vorherigen Bild bestimmt werden;
- Bestimmen jeweils einer Kurve für die Referenzbildpunkte im vorherigen Bild aus der ermittelten Bewegung der Videokamera;
- Berechnen, ob im vorherigen Bild die korrespondierenden Bildpunkte auf den entsprechenden Kurven liegen; und
- Berechnen der Abstände der realen Punkte von der Videokamera aus den Positionen auf den Kurven, wenn die korrespondierenden Bildpunkte auf den entsprechenden Kurven liegen.

2. Verfahren nach Anspruch 1, weiter aufweisend:
- Berechnen der Geschwindigkeit des Objekts in dem Umfeld, wenn die korrespondierenden Bildpunkte nicht auf den entsprechenden Kurven liegen.

3. Verfahren nach Anspruch 1 oder 2, weiter aufweisend:
- Ermitteln einer Datenstruktur des räumlichen Aufbaus des von der Videokamera detektierten Umfelds aus den ermittelten Abständen,
- Bestimmen von Informationen über das Objekt im Umfeld aus der Datenstruktur; und
- optisches und/oder akustisches Anzeigen der Informationen einem Fahrzeuglenker.

4. Verfahren nach Anspruch 3, wobei die Informationen in einem System zur Einparkhilfe oder automatischen Bremsunterstützung verwendet werden.
